# EUROPEAN PATENT APPLICATION

(11) **EP 4 629 483 A1**
(43) Date of publication of application: **08.10.2025**
(21) Application number: 24175752.5
(22) Date of filing: 14.05.2024
(51) Int. Cl.: H02K 3/12, H02K 3/28, H02K 15/00, H02K 29/03

(54) **STATOR ASSEMLY AND MOTOR**

(30) Priority: 07.04.2024 CN 202410412667
(71) Applicant: Jing-Jin Electric Technologies Co., Ltd, Beijing 100023 (CN)
(72) Inventor: Cai, Chunxia, Beijing, 100023 (CN); Zhang, Kaihe, Beijing, 100023 (CN); Xu, Xin, Beijing, 100023 (CN); Zhang, Liangliang, Beijing, 100023 (CN)
(74) Representative: Schwarz & Partner Patentanwälte GmbH

(57) **Abstract**

A stator assembly and a motor are disclosed. The stator assembly comprises a stator core (1) and stator windings (3). The stator windings (3) comprise a U-phase winding, a V-phase winding, and a W-phase winding. An n-number of stator slots (2) are provided on an inner circumferential surface of the stator core (1), each stator slot (2) is divided into an m-number of accommodating layers along a radial direction of the stator core (1), the U-phase winding is laid in the stator slot (2) and is arranged in the same layer in an m-th accommodating layer and arranged across layers in other accommodating layers, n is a multiple of 6, and m is an odd number greater than 3. The U-phase winding comprises a first branch winding and a second branch winding, which are formed by connecting the same number and type of coils in series; the V-phase winding is obtained by rotating the U-phase winding clockwise by 120°, and the W-phase winding is obtained by rotating the U-phase winding clockwise by 240°. The stator assembly can reduce the torque ripple and noise performance of the motor, enhance the flexibility of motor assembly, and achieve no circulating current or phase difference between branches.

## Description

### TECHNICAL FIELD

The present disclosure belongs to the technical field of motors, and particularly relates to a stator assembly and a motor.

### BACKGROUND

At present, the stator windings of driving motor are mostly composed of an even number of layers of flat wire windings. In order to adapt to various technical requirements of different motors, an odd number of layers of flat wire windings are needed. However, the conventional odd number of layers of flat wire windings mostly adopt full pitch connections, and there are hair-pin coils arranged in the same layer at both the welding and non-welding ends of the stator windings. When the hair-pin coils arranged in the same layer are twisted, they will occupy the radial inner space of the stator slot, so that the rotor assembly must be assembled from only one side of the stator assembly. Moreover, the full pitch connection will result in higher ratios of 5th and 7th harmonics of the motor and thus a higher motor noise.

### SUMMARY

With respect to the above problems, the present disclosure discloses a stator assembly and a motor to overcome or at least partially solve the above problems.

To achieve the above object, the present disclosure adopts the following technical solutions.

An aspect of the present disclosure discloses a stator assembly. The stator assembly comprises a stator core and stator windings, the stator windings comprise a U-phase winding, a V-phase winding, and a W-phase winding;
an n-number of stator slots are provided on an inner circumferential surface of the stator core, each stator slot is divided into an m-number of accommodating layers along a radial direction of the stator core, the U-phase winding is laid in the stator slot and is arranged in the same layer in an m-th accommodating layer and arranged across layers in other accommodating layers, n is a multiple of 6, and m is an odd number greater than 3;
the U-phase winding comprises a first branch winding and a second branch winding, the first branch winding and the second branch winding are formed by connecting a same number and type of coils in series; the V-phase winding is obtained by rotating the U-phase winding clockwise by 120°, and the W-phase winding is obtained by rotating the U-phase winding clockwise by 240°.

Further, each stator slot is divided into 5 accommodating layers which include, from an opening of the stator slot to a bottom of the stator slot, an a-th accommodating layer, a b-th accommodating layer, a c-th accommodating layer, a d-th accommodating layer, and an e-th accommodating layer in sequence;
the first branch winding comprises a first coil unit, a second coil unit, and a third coil unit;
the first coil unit comprises an S-shaped lead-out coil group and multiple full pitch hair-pin coil groups, the S-shaped lead-out coil group is located at a head end of the first coil unit and is sequentially connected in series with the multiple full pitch hair-pin coil groups, the first coil unit is arranged across the a-th accommodating layer and the b-th accommodating layer;
the second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a long pitch hair-pin coil group;
the third coil unit comprises multiple short pitch hair-pin coils and multiple long pitch hair-pin coils, the multiple short pitch hair-pin coils and the multiple long pitch hair-pin coils are alternately connected in series, the third coil unit is arranged across the e-th accommodating layer and the e-th accommodating layer, and is connected to a tail end of the second coil unit through a full pitch hair-pin coil group.

Further, a coil connection route from a positive lead-in terminal to a negative lead-out terminal in the first branch winding is 1a, 7b, 13a, 19b, 25a, 31b, 37a, 43b, 2c, 8d, 14c, 20d, 26c, 32d, 38c, 44d, 2e, 44e, 39e, 33e, 26e, 20e, 15e, 9e, 3d, 45c, 39d, 33c, 27d, 21c, 15d, 9c, 2b, 44a, 38b, 32a, 26b, 20a 14b, 8a; a coil connection route from a positive lead-in terminal to a negative lead-out terminal in the second branch winding is 2a, 8b, 14a, 20b, 26a, 32b, 38a, 44b, 3c, 9d, 15c, 21d, 27c, 33d, 39c, 45d, 3e, 45e, 38e, 32e, 27e, 21e, 14e, 8e, 2d, 44c, 38d, 32c, 26d, 20c, 14d, 8c, 1b, 43a, 37b, 31a, 25b, 19a, 13b, 7a.

Further, in the third coil unit, the long pitch hair-pin coil and the short pitch hair-pin coil are twisted at a same distance.

Further, each stator slot is divided into 7 accommodating layers which include, from an opening of the stator slot to a bottom of the stator slot, an a-th accommodating layer, a b-th accommodating layer, a c-th accommodating layer, a d-th accommodating layer, an e-th accommodating layer, an f-th accommodating layer and a g-th accommodating layer in sequence;
the first branch winding comprises a first coil unit, a second coil unit, a third coil unit, and a fourth coil unit;
the first coil unit comprises an S-shaped lead-out coil group and multiple full pitch hair-pin coil groups. the S-shaped lead-out coil group is located at a head end of the first coil unit and is sequentially connected in series with the multiple full pitch hair-pin coil groups, the first coil unit is arranged across the a-th accommodating layer and the b-th accommodating layer;
the second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a full pitch hair-pin coil group;
the third coil unit comprises multiple full pitch hair-pin coil groups sequentially connected in series, the third coil unit is arranged across the e-th accommodating layer and the f-th accommodating layer, and a head end of the third coil unit is connected to a tail end of the second coil unit through a long pitch hair-pin coil group;
the fourth coil unit comprises multiple short pitch hair-pin coils and multiple long pitch hair-pin coils, the multiple short pitch hair-pin coils and the multiple long pitch hair-pin coils are alternately connected in series, the fourth coil unit is arranged across the g-th accommodating layer and the g-th accommodating layer, and is connected to a tail end of the third coil unit through a full pitch hair-pin coil group.

Further, each stator slot is divided into 9 accommodating layers which include, from an opening of the stator slot to a bottom of the stator slot, an a-th accommodating layer, a b-th accommodating layer, a c-th accommodating layer, a d-th accommodating layer, an e-th accommodating layer, an f-th accommodating layer, a g-th accommodating layer, an h-th accommodating layer and an i-th accommodating layer in sequence;
the first branch winding comprises a first coil unit, a second coil unit, a third coil unit, a fourth coil unit, and a fifth coil unit;
the first coil unit comprises an S-shaped lead-out coil group and multiple full pitch hair-pin coil groups. the S-shaped lead-out coil group is located at a head end of the first coil unit and is sequentially connected in series with the multiple full pitch hair-pin coil groups, the first coil unit is arranged across the a-th accommodating layer and the b-th accommodating layer;
the second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a full pitch hair-pin coil group;
the third coil unit comprises multiple full pitch hair-pin coil groups sequentially connected in series, the third coil unit is arranged across the e-th accommodating layer and the f-th accommodating layer, and a head end of the third coil unit is connected to a tail end of the second coil unit through a long pitch hair-pin coil group;
the fourth coil unit comprises multiple full pitch hair-pin coil groups sequentially connected in series, the fourth coil unit is arranged across the g-th accommodating layer and the h-th accommodating layer, and a head end of the fourth coil unit is connected to a tail end of the third coil unit through a full pitch hair-pin coil group;
the fifth coil unit comprises multiple short pitch hair-pin coils and multiple long pitch hair-pin coils, the multiple short pitch hair-pin coils and the multiple long pitch hair-pin coils are alternately connected in series, the fifth coil unit is arranged across the i-th accommodating layer and the i-th accommodating layer, and is connected to a tail end of the fourth coil unit through a full pitch hair-pin coil group.

Further, the first branch winding and the second branch winding are connected in series or in parallel.

Further, the U-phase winding, the V-phase winding, and the W-phase winding are connected by a star or delta connection.

Another aspect of the present disclosure discloses a motor. The motor comprises a rotor assembly and the stator assembly as stated above, and the rotor assembly is coaxially arranged inside the stator assembly.

The advantages and beneficial effects of the present disclosure are as follows.

The stator assembly of the present disclosure can achieve short pitch connection of an odd number of layers of flat wire windings, significantly reduce the 5th and 7th harmonics of the stator winding, and reduce the torque ripple and noise performance of the motor. Moreover, in this stator assembly, only on the radial outer side of the stator slot, hair-pin coils are arranged in the same layer, so that only the radial outer space of the stator slot is occupied, and the radial inner space of the stator slot is not occupied. In this way, the rotor assembly can be installed on either side of the stator assembly, thereby improving the flexibility of motor assembly. In addition, by forming the first and second branch windings by connecting the same number and type of coils in series, it is possible to achieve no circulating current or phase difference between the branches, thereby avoiding additional heating during motor operation and improving motor efficiency and reliability.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:
FIG. 1 is a radial cross-sectional view of a stator assembly according to an embodiment of the present disclosure;
FIG. 2 is a schematic view of the arrangement of a U-phase winding in a stator slot according to an embodiment of the present disclosure;
FIG. 3 is a schematic view of the wiring of the U-phase winding according to an embodiment of the present disclosure;
FIG. 4 is a schematic view of the configuration of a full pitch hair-pin coil group according to an embodiment of the present disclosure;
FIG. 5 is a schematic view of the configuration of a long pitch hair-pin coil group according to an embodiment of the present disclosure;
FIG. 6 is a schematic view of the configuration of an S-shaped lead-out coil group according to an embodiment of the present disclosure;
FIG. 7 is a schematic view of the configuration of three phases connected in a delta connection;
FIG. 8 is a schematic view of the configuration of three phases connected in a star connection;
FIG. 9 is a schematic view of the arrangement of a U-phase winding in a stator slot according to another embodiment of the present disclosure; and
FIG. 10 is a schematic view of the arrangement of a U-phase winding in a stator slot according to still another embodiment of the present disclosure.

In the drawings: 1. stator core; 2. stator slot; 3. stator winding.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

The technical solutions provided by the embodiments of the present disclosure will be described in detail below in conjunction with the accompanying drawings.

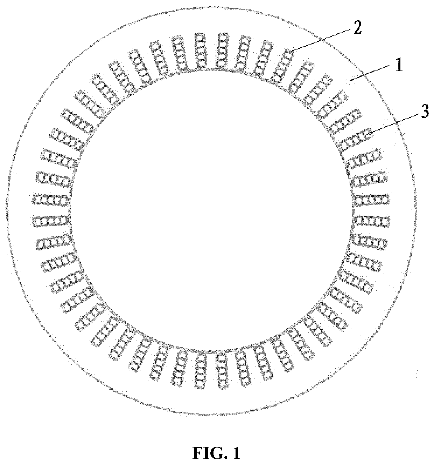

An embodiment of the present disclosure provides a stator assembly, as shown in FIG. 1. The stator assembly comprises a stator core 1 and stator windings 3, and the stator windings 3 comprise a U-phase winding, a V-phase winding, and a W-phase winding.

An n-number of stator slots 2 are provided on an inner circumferential surface of the stator core 1. Each stator slot 2 opens towards the axis of the stator core. Each stator slot 2 is divided into an m-number of accommodating layers in the radial direction of the stator core 1. The accommodating layer near a slot opening of the stator slot 2 is the first accommodating layer, the accommodating layer near a slot bottom of the stator slot 2 is the last layer, i.e. the m-th accommodating layer, n is a multiple of 6, and m is an odd number greater than 3. The U-phase winding is laid in the stator slot 2, and it is arranged in the same layer in the m-th accommodating layer and arranged across layers in other accommodating layers, thereby achieving short pitch connection of the stator windings in odd numbered layers, which can effectively reduce the 5th and 7th harmonics generated by the stator windings.

It should be noted that for windings in which the number of slots of each phase under each pole is 2 (i.e., *q* = the number of stator slots/2 * the number of pole pairs * the number of phases = 2), the short pitch connection refers to that each phase of the motor is distributed in adjacent three stator slots, and the full pitch connection refers to that each phase of the motor is distributed in adjacent two stator slots.

In addition, the U-phase winding comprises a first branch winding and a second branch winding. That is, the first branch winding and the second branch winding are laid in the stator slots, and the first branch winding and the second branch winding are formed by connecting the same number and type of coils in series, thereby achieving no circulating current or phase difference between branches. The V-phase winding is obtained by rotating the U-phase winding clockwise by 120°, and the W-phase winding is obtained by rotating the U-phase winding clockwise by 240°.

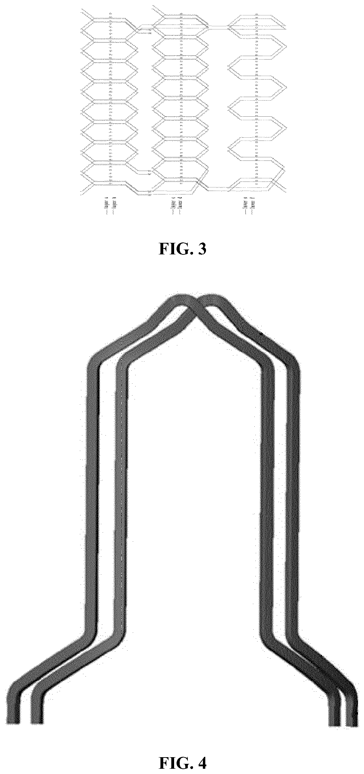

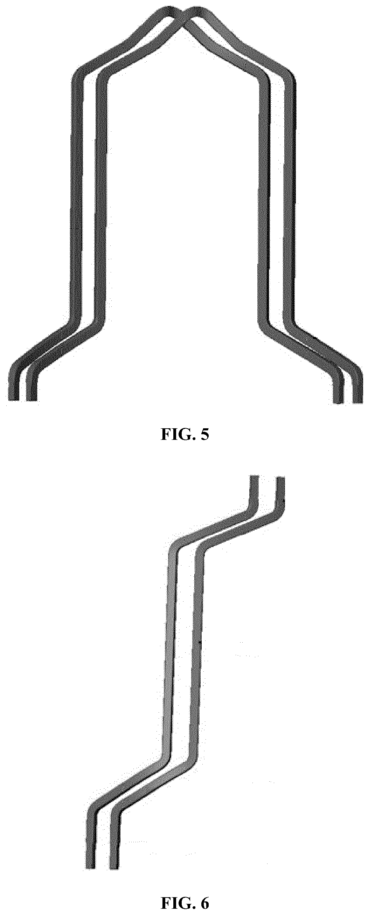

Specifically, the first branch winding comprises a first coil unit to a (m-1)/2th coil unit sequentially connected in series. The first coil unit is arranged across the first and second accommodating layers, i.e. arranged across layers. The first coil unit comprises an S-shaped lead-out coil group located at a head end, and multiple full pitch hair-pin coil groups sequentially connected in series. The second coil unit is arranged across the third and fourth accommodating layers. The second coil unit comprises multiple full pitch hair-pin coil groups sequentially connected in series. A head end of the second coil is connected to a tail end of the first coil unit through a long pitch hair-pin coil group or a full pitch hair-pin coil group. Similarly, the [(m-1)/2-1]th coil unit is arranged across the (m-2)th and (m-1)th accommodating layers. The [(m-1)/2-1]th coil unit comprises multiple full pitch hair-pin coil groups sequentially connected in series. Ahead end of the [(m-1)/2-1]th coil unit is connected to a tail end of the [(m-1)/2-2]th coil unit through a long pitch hair-pin coil group or a full pitch hair-pin coil group. The (m-1)/2th coil unit comprises multiple short pitch hair-pin coils and multiple long pitch hair-pin coils. The multiple short pitch hair-pin coils and multiple long pitch hair-pin coils are alternately connected in series. The (m-1)/2th coil unit is arranged across the m-th and m-th accommodating layers, that is, arranged in the same layer. The (m-1)/2th coil unit is connected to a tail end of the [(m-1)/2-1]th coil unit through a full pitch hair-pin coil group. As shown in FIGS. 4 to 6, the full pitch hair-pin coil group is obtained by arranging two full pitch hair-pin coils in a staggered manner, the long pitch hair-pin coil group is obtained by arranging two long pitch hair-pin coils in a staggered manner, and the S-shaped lead-out coil group is obtained by arranging two S-shaped lead-out coils in a staggered manner.

By arranging the stator windings in the above configuration, only on the radial outer side of the stator slot, the hair-pin coils are formed in the same layer, which facilitates the flexible assembly of the rotor assembly. That is, in such a winding connection, the hair-pin coils arranged in the same layer only exist in the m-th accommodating layer and its outer layer space; the welding ends of the stator windings are all full pitch hair-pin coils, while the non-welding ends of the stator windings have both long pitch hair-pin coils and short pitch hair-pin coils. Moreover, in such a winding connection, the lead-out wires and neutral points of three phases are distributed and concentratedly arranged in the same hierarchical space, there is no need to use complicated busbars, the leading-out can be achieved simply by bending flat copper wires, thereby making the structure and manufacturing process of the stator assembly simpler, and thus further reducing the production cost of motor.

In sum, the stator assembly of this embodiment can achieve short pitch connection of an odd number of layers of flat wire windings, significantly reduce the 5th and 7th harmonics of the stator windings, and reduce the torque ripple and noise performance of the motor. Moreover, in this stator assembly, only on the radial outer side of the stator slot, hair-pin coils are arranged in the same layer, so that only the radial outer space of the stator slot is occupied, and the radial inner space of the stator slot is not occupied. In this way, the rotor assembly can be installed on either side of the stator assembly, thereby improving the flexibility of motor assembly. In addition, by forming the first and second branch windings by connecting the same number and type of coils in series, it is possible to achieve no circulating current or phase difference between the branches, thereby avoiding additional heating during motor operation and improving motor efficiency and reliability.

Herein, the radial outer side of the stator slot is defined as, in the radial direction of the stator core, the side of the stator slot that is away from the axis of the stator core, i.e., the outer side of the m-th accommodating layer; the radial inner side of the stator slot is defined as, in the radial direction of the stator core, the side of the stator slot that is close to the axis of the stator core, i.e., the inner side of the m-th accommodating layer.

In this embodiment, the number of stator slots is 48, the number of poles is 2p = 8, and the number of slots of each phase under each pole is q = 2. As shown in FIGS. 1 to 3, each stator slot is divided into 5 accommodating layers, which include, from an opening of the stator slot to a bottom of the stator slot, an a-th accommodating layer, a b-th accommodating layer, a c-th accommodating layer, a d-th accommodating layer, and an e-th accommodating layer in sequence. The first branch winding comprises a first coil unit, a second coil unit, and a third coil unit.

The first coil unit comprises an S-shaped lead-out coil group and multiple full pitch hair-pin coil groups, the S-shaped lead-out coil group is located at a head end of the first coil unit and is sequentially connected in series with the multiple full pitch hair-pin coil groups, the first coil unit is arranged across the a-th accommodating layer and the b-th accommodating layer. The second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a long pitch hair-pin coil group. The third coil unit comprises multiple short pitch hair-pin coils and multiple long pitch hair-pin coils, the multiple short pitch hair-pin coils and the multiple long pitch hair-pin coils are alternately connected in series, the third coil unit is arranged across the e-th accommodating layer and the e-th accommodating layer, and is connected to a tail end of the second coil unit through a full pitch hair-pin coil group.

Specifically, a coil connection route from a positive lead-in terminal to a negative lead-out terminal in the first branch winding is 1a, 7b, 13a, 19b, 25a, 31b, 37a, 43b, 2c, 8d, 14c, 20d, 26c, 32d, 38c, 44d, 2e, 44e, 39e, 33e, 26e, 20e, 15e, 9e, 3d, 45c, 39d, 33c, 27d, 21c, 15d, 9c, 2b, 44a, 38b, 32a, 26b, 20a 14b, 8a; a coil connection route from a positive lead-in terminal to a negative lead-out terminal in the second branch winding is 2a, 8b, 14a, 20b, 26a, 32b, 38a, 44b, 3c, 9d, 15c, 21d, 27c, 33d, 39c, 45d, 3e, 45e, 38e, 32e, 27e, 21e, 14e, 8e, 2d, 44c, 38d, 32c, 26d, 20c, 14d, 8c, 1b, 43a, 37b, 31a, 25b, 19a, 13b, 7a.

In this way, the winding of each phase is concentratedly arranged in the stator slot without the problem of interval arrangement, thereby reducing the complexity of winding configuration and facilitating the automation of winding arrangement.

Moreover, in the third coil unit, the long pitch hair-pin coil and the short pitch hair-pin coil are twisted at the same distance, thereby ensuring that the production of long pitch hair-pin coil and short pitch hair-pin coil can be automated.

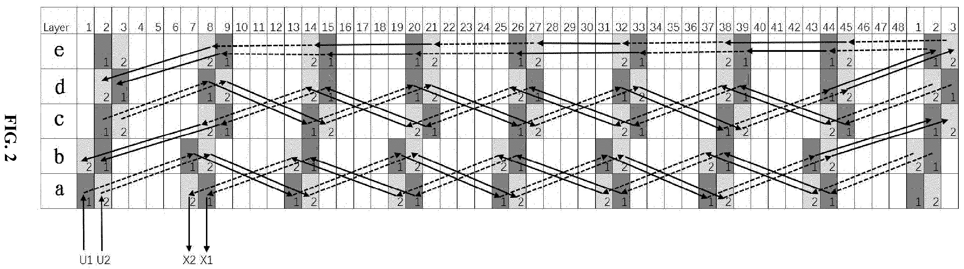

Of course, alternatively, as shown in FIG. 2, the U1 and X1 lead-out terminals are connected, the U2 and X2 lead-out terminals are connected, and then disconnected at the e-th layer winding of the welding ends of the stator winding to act as the lead-out wires of the stator winding, which is also within the protection scope of the present disclosure.

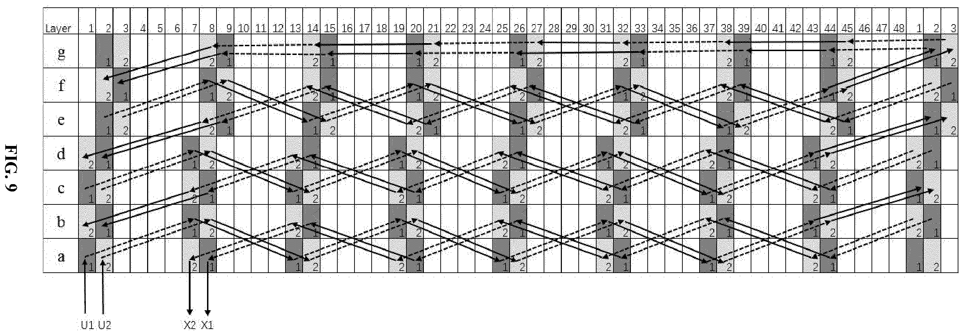

In another embodiment, as shown in FIG. 9, each stator slot is divided into 7 accommodating layers which include, from an opening of the stator slot to a bottom of the stator slot, an a-th accommodating layer, a b-th accommodating layer, a c-th accommodating layer, a d-th accommodating layer, an e-th accommodating layer, an f-th accommodating layer and a g-th accommodating layer in sequence. The first branch winding comprises a first coil unit, a second coil unit, a third coil unit, and a fourth coil unit.

Specifically, the first coil unit comprises an S-shaped lead-out coil group and multiple full pitch hair-pin coil groups. the S-shaped lead-out coil group is located at a head end of the first coil unit and is sequentially connected in series with the multiple full pitch hair-pin coil groups, the first coil unit is arranged across the a-th accommodating layer and the b-th accommodating layer. The second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a full pitch hair-pin coil group. The third coil unit comprises multiple full pitch hair-pin coil groups sequentially connected in series, the third coil unit is arranged across the e-th accommodating layer and the f-th accommodating layer, and a head end of the third coil unit is connected to a tail end of the second coil unit through a long pitch hair-pin coil group. The fourth coil unit comprises multiple short pitch hair-pin coils and multiple long pitch hair-pin coils, the multiple short pitch hair-pin coils and the multiple long pitch hair-pin coils are alternately connected in series, the fourth coil unit is arranged across the g-th accommodating layer and the g-th accommodating layer, and is connected to a tail end of the third coil unit through a full pitch hair-pin coil group.

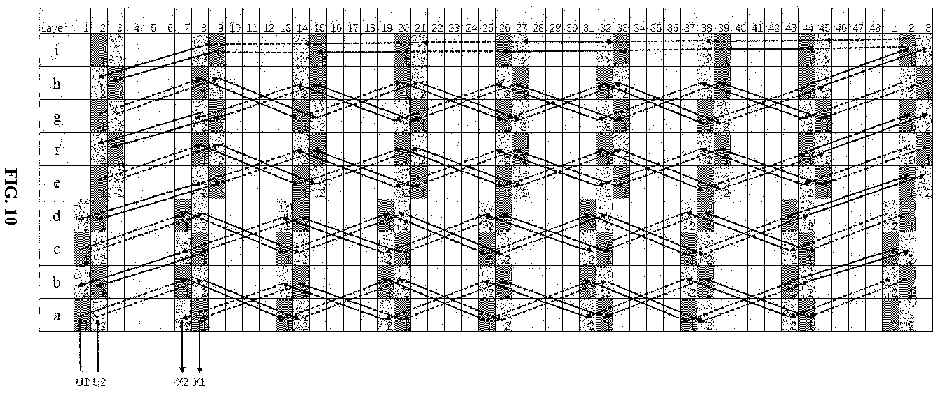

In still another embodiment, as shown in FIG. 10, each stator slot is divided into 9 accommodating layers which include, from an opening of the stator slot to a bottom of the stator slot, an a-th accommodating layer, a b-th accommodating layer, a c-th accommodating layer, a d-th accommodating layer, an e-th accommodating layer, an f-th accommodating layer, a g-th accommodating layer, an h-th accommodating layer and an i-th accommodating layer in sequence. The first branch winding comprises a first coil unit, a second coil unit, a third coil unit, a fourth coil unit, and a fifth coil unit.

Specifically, the first coil unit comprises an S-shaped lead-out coil group and multiple full pitch hair-pin coil groups. the S-shaped lead-out coil group is located at a head end of the first coil unit and is sequentially connected in series with the multiple full pitch hair-pin coil groups, the first coil unit is arranged across the a-th accommodating layer and the b-th accommodating layer. The second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a full pitch hair-pin coil group. The third coil unit comprises multiple full pitch hair-pin coil groups sequentially connected in series, the third coil unit is arranged across the e-th accommodating layer and the f-th accommodating layer, and a head end of the third coil unit is connected to a tail end of the second coil unit through a long pitch hair-pin coil group. The fourth coil unit comprises multiple full pitch hair-pin coil groups sequentially connected in series, the fourth coil unit is arranged across the g-th accommodating layer and the h-th accommodating layer, and a head end of the fourth coil unit is connected to a tail end of the third coil unit through a full pitch hair-pin coil group. The fifth coil unit comprises multiple short pitch hair-pin coils and multiple long pitch hair-pin coils, the multiple short pitch hair-pin coils and the multiple long pitch hair-pin coils are alternately connected in series, the fifth coil unit is arranged across the i-th accommodating layer and the i-th accommodating layer, and is connected to a tail end of the fourth coil unit through a full pitch hair-pin coil group.

In this embodiment, the first branch winding and the second branch winding are connected in series or in parallel.

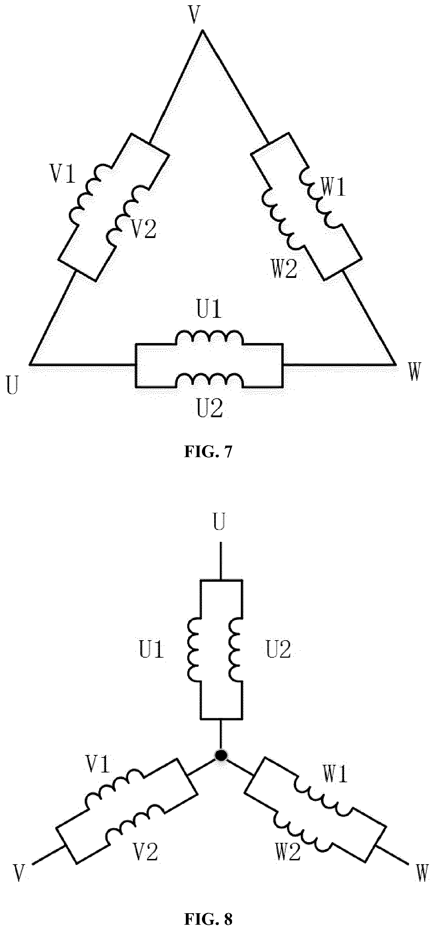

Moreover, as shown in FIGS. 7 and 8, the U-phase winding, V-phase winding, and W-phase winding are connected by a star or delta connection, thereby forming the stator winding.

Another embodiment of the present disclosure provides a motor. The motor comprises a rotor assembly and the stator assembly described in the above embodiments. The rotor assembly is coaxially arranged inside the stator assembly. This motor has the advantages such as low vibration noise, high operating efficiency, good reliability, flexible assembly, simple manufacturing process, and low cost.

The above merely describes particular embodiments of the present disclosure. By the teaching of the present disclosure, a person skilled in the art can make other modifications or variations based on the above embodiments. A person skilled in the art should appreciate that, the detailed description above is only for the purpose of explaining the present disclosure, and the protection scope of the present disclosure should be subject to the protection scope of the claims.

## Claims

1. A stator assembly, comprising: a stator core (1) and stator windings (3), **characterized in that**: the stator windings (3) comprise a U-phase winding, a V-phase winding, and a W-phase winding;
an n-number of stator slots (2) are provided on an inner circumferential surface of the stator core (1), each stator slot (2) is divided into an m-number of accommodating layers along a radial direction of the stator core (1), the U-phase winding is laid in the stator slot (2) and is arranged in the same layer in an m-th accommodating layer and arranged across layers in other accommodating layers, n is a multiple of 6, and m is an odd number greater than 3;
the U-phase winding comprises a first branch winding and a second branch winding, the first branch winding and the second branch winding are formed by connecting a same number and type of coils in series; the V-phase winding is obtained by rotating the U-phase winding clockwise by 120°, and the W-phase winding is obtained by rotating the U-phase winding clockwise by 240°.

2. The stator assembly according to claim 1, **characterized in that**: each stator slot (2) is divided into 5 accommodating layers which include, from an opening of the stator slot (2) to a bottom of the stator slot (2), an a-th accommodating layer, a b-th accommodating layer, a c-th accommodating layer, a d-th accommodating layer, and an e-th accommodating layer in sequence;
the first branch winding comprises a first coil unit, a second coil unit, and a third coil unit;
the first coil unit comprises an S-shaped lead-out coil group and multiple full pitch hair-pin coil groups, the S-shaped lead-out coil group is located at a head end of the first coil unit and is sequentially connected in series with the multiple full pitch hair-pin coil groups, the first coil unit is arranged across the a-th accommodating layer and the b-th accommodating layer;
the second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a long pitch hair-pin coil group;
the third coil unit comprises multiple short pitch hair-pin coils and multiple long pitch hair-pin coils, the multiple short pitch hair-pin coils and the multiple long pitch hair-pin coils are alternately connected in series, the third coil unit is arranged across the e-th accommodating layer and the e-th accommodating layer, and is connected to a tail end of the second coil unit through a full pitch hair-pin coil group.

3. The stator assembly according to claim 2, **characterized in that**: a coil connection route from a positive lead-in terminal to a negative lead-out terminal in the first branch winding is 1a, 7b, 13a, 19b, 25a, 31b, 37a, 43b, 2c, 8d, 14c, 20d, 26c, 32d, 38c, 44d, 2e, 44e, 39e, 33e, 26e, 20e, 15e, 9e, 3d, 45c, 39d, 33c, 27d, 21c, 15d, 9c, 2b, 44a, 38b, 32a, 26b, 20a 14b, 8a; a coil connection route from a positive lead-in terminal to a negative lead-out terminal in the second branch winding is 2a, 8b, 14a, 20b, 26a, 32b, 38a, 44b, 3c, 9d, 15c, 21d, 27c, 33d, 39c, 45d, 3e, 45e, 38e, 32e, 27e, 21e, 14e, 8e, 2d, 44c, 38d, 32c, 26d, 20c, 14d, 8c, 1b, 43a, 37b, 31a, 25b, 19a, 13b, 7a.

4. The stator assembly according to claim 2, **characterized in that**: in the third coil unit, the long pitch hair-pin coil and the short pitch hair-pin coil are twisted at a same distance.

5. The stator assembly according to claim 1, **characterized in that**: each stator slot (2) is divided into 7 accommodating layers which include, from an opening of the stator slot (2) to a bottom of the stator slot (2), an a-th accommodating layer, a b-th accommodating layer, a c-th accommodating layer, a d-th accommodating layer, an e-th accommodating layer, an f-th accommodating layer and a g-th accommodating layer in sequence;
the first branch winding comprises a first coil unit, a second coil unit, a third coil unit, and a fourth coil unit;
the first coil unit comprises an S-shaped lead-out coil group and multiple full pitch hair-pin coil groups, the S-shaped lead-out coil group is located at a head end of the first coil unit and is sequentially connected in series with the multiple full pitch hair-pin coil groups, the first coil unit is arranged across the a-th accommodating layer and the b-th accommodating layer;
the second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a full pitch hair-pin coil group;
the third coil unit comprises multiple full pitch hair-pin coil groups sequentially connected in series, the third coil unit is arranged across the e-th accommodating layer and the f-th accommodating layer, and a head end of the third coil unit is connected to a tail end of the second coil unit through a long pitch hair-pin coil group;
the fourth coil unit comprises multiple short pitch hair-pin coils and multiple long pitch hair-pin coils, the multiple short pitch hair-pin coils and the multiple long pitch hair-pin coils are alternately connected in series, the fourth coil unit is arranged across the g-th accommodating layer and the g-th accommodating layer, and is connected to a tail end of the third coil unit through a full pitch hair-pin coil group.

6. The stator assembly according to claim 1, **characterized in that**: each stator slot (2) is divided into 9 accommodating layers which include, from an opening of the stator slot (2) to a bottom of the stator slot (2), an a-th accommodating layer, a b-th accommodating layer, a c-th accommodating layer, a d-th accommodating layer, an e-th accommodating layer, an f-th accommodating layer, a g-th accommodating layer, an h-th accommodating layer and an i-th accommodating layer in sequence;
the first branch winding comprises a first coil unit, a second coil unit, a third coil unit, a fourth coil unit, and a fifth coil unit;
the first coil unit comprises an S-shaped lead-out coil group and multiple full pitch hair-pin coil groups, the S-shaped lead-out coil group is located at a head end of the first coil unit and is sequentially connected in series with the multiple full pitch hair-pin coil groups, the first coil unit is arranged across the a-th accommodating layer and the b-th accommodating layer;
the second coil unit comprises multiple full pitch hair-pin coil groups sequentially connected in series, the second coil unit is arranged across the c-th accommodating layer and the d-th accommodating layer, and a head end of the second coil unit is connected to a tail end of the first coil unit through a full pitch hair-pin coil group;
the third coil unit comprises multiple full pitch hair-pin coil groups sequentially connected in series, the third coil unit is arranged across the e-th accommodating layer and the f-th accommodating layer, and a head end of the third coil unit is connected to a tail end of the second coil unit through a long pitch hair-pin coil group;
the fourth coil unit comprises multiple full pitch hair-pin coil groups sequentially connected in series, the fourth coil unit is arranged across the g-th accommodating layer and the h-th accommodating layer, and a head end of the fourth coil unit is connected to a tail end of the third coil unit through a full pitch hair-pin coil group;
the fifth coil unit comprises multiple short pitch hair-pin coils and multiple long pitch hair-pin coils, the multiple short pitch hair-pin coils and the multiple long pitch hair-pin coils are alternately connected in series, the fifth coil unit is arranged across the i-th accommodating layer and the i-th accommodating layer, and is connected to a tail end of the fourth coil unit through a full pitch hair-pin coil group.

7. The stator assembly according to any one of claims 1-6, **characterized in that**: the first branch winding and the second branch winding are connected in series or in parallel.

8. The stator assembly according to any one of claims 1-6, **characterized in that**: the U-phase winding, the V-phase winding, and the W-phase winding are connected by a star or delta connection.

9. A motor comprising a rotor assembly and the stator assembly according to any one of claims 1-8, **characterized in that**: the rotor assembly is coaxially arranged inside the stator assembly.
